Europäisches Patentamt

(19) European Patent Office

Office européen des brevets

(11) Publication number : **0 437 311 A1**

(12) **EUROPEAN PATENT APPLICATION**

(21) Application number : **91300036.0**

(22) Date of filing : **03.01.91**

(51) Int. Cl.⁵ : **C02F 1/00, C02F 1/28**

(30) Priority : **04.01.90 GB 9000188**

(43) Date of publication of application :
**17.07.91 Bulletin 91/29**

(84) Designated Contracting States :
**DE FR GB IT**

(71) Applicant : **ENSERCH INTERNATIONAL INVESTMENTS LTD. TRADING AS H&G ENGINEERING**
**Grosvenor House, 125 High Street**
**Croydon, Surrey CRO 9XP (GB)**

(72) Inventor : **Winter, Christopher Leslie**
**1 Burrows Close**
**Bookham, Surrey KT23 3HB (GB)**

(74) Representative : **Briddes, Sam**
**c/o Earl & Wright 18th Floor, Portland House**
**Stag Place**
**London SW1E 5BH (GB)**

(54) Solids removal device.

㊗ An arrangement for removing settled solid particles from a fluid, comprising a tank containing a bed composed of the particles in the fluid, and a removal pipe through which the particles and fluid can be withdrawn from the bed, in which the removal pipe (25) is adapted to withdraw both a mixture of the fluid and particles (24), and also substantially pure fluid (22) drawn from within the tank.

EP 0 437 311 A1

(11)

(12)

26

23

22

21

25

28

24

(10)

**FIG 3**

## SOLIDS REMOVAL DEVICE

The invention relates to the removal of particulate solids from fluids, and specifically from liquids. In particular it relates to the removal of granular activated carbon from adsorbers such as those used in water treatment industry.

In the water treatment industry, large Post-Adsorbers (incorporating e.g. granular activated carbon (GAC) in particle beds) are used to remove pesticides and herbicides and micro-organic pollutants from water. Because of the very low concentrations involved, contact times are long, thus giving rise to the need for large adsorbers.

When the carbon capacity is exhausted by pesticides, herbicides or other pollutants it is necessary to remove the GAC from the adsorber for regeneration.

If the GAC is removed simply by having a pipe at the bottom of the bed, then the ratio of GAC to water flowing into that pipe is fixed, and the fixed ratio may not allow the water to move the GAC satisfactorily along the pipe. In these circumstances the GAC may settle in or erode the pipe, or there may be attrition of the carbon particles.

The invention provides an arrangement for removing settled solid particles from a fluid, comprising a tank containing a bed composed of the particles in the fluid, and a removal pipe through which the particles and fluid can be withdrawn from the bed, in which the removal pipe is adapted to withdraw both a mixture of the fluid and particles, and also substantially pure fluid drawn from within the tank.

In one form of the invention it is preferred that the substantially pure fluid is drawn into the removal pipe through a filter, and it is further preferred that the filter is made from Wedgewire (TM).

In another form of the invention it is preferred that the substantially pure fluid is drawn into the removal pipe from a region of pure fluid within the tank, and it is further preferred that the region of pure fluid is above the bed composed of particles in the fluid.

In one specific form of the invention the tank contains a liquid, and more particularly it is preferred that the liquid is water and the particles are of granular activated carbon or sand or a mixture of both.

This invention allows the ratio of water to carbon flowing along the removal pipe to be varied to give satisfactory flow, so ensuring that the carbon does not settle, nor erode the pipe nor cause attrition of the carbon particles.

Three specific embodiments of the invention will now be described by way of example with reference to the accompanying drawings in which :

Figure 1 is a diagrammatic cross-section through an adsorber tank showing a carbon removal pipe at the bottom ;

Figure 2 is a similar section of an alternative embodiment of the invention ; and

Figure 3 shows an additional embodiment of the invention.

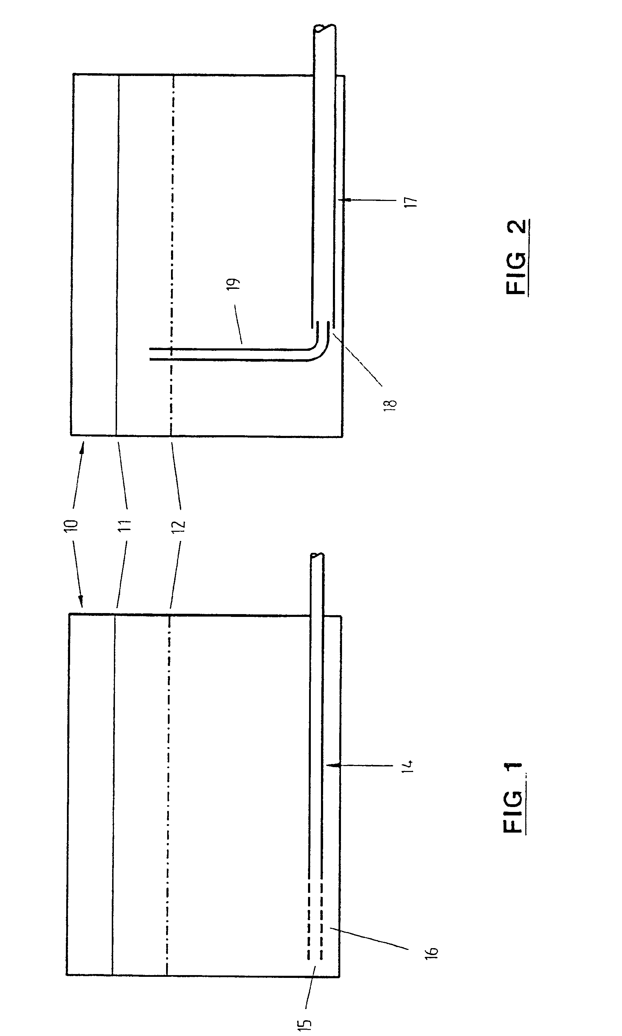

Figure 1 is a cross-section through an adsorber tank 10 containing a bed of granular activated carbon, showing a nominal water level 11 and a nominal top limit to the carbon bed level at 12. A carbon removal pipe 14 has an open end 15 and a filter portion 16.

Preferably the removal pipe 14 is extended with a tubular piece of Wedgewire (TM) to act as the filter portion 16.

The actual arrangement of the Wedgewire filter on the removal pipe 14 depends on the type, size and shape of the carbon to be moved.

Features of the invention include the use, at the submerged end of the pipe, of a permanent filter so that in addition to water and carbon entering the end of the pipe, water, but not carbon, can enter the pipe through the filter, thereby altering the water to carbon ratio flowing along the pipe. A pressure differential is required between the pipe and the carbon bed to cause carbon particles and the water to flow into and along the pipe.

Figure 2 is a similar cross-section in which a carbon removal pipe 17 has an open end 18, and there is a further pipe 19 arranged to draw water from a layer of clear water (between levels 11 and 12). This pipe 19 discharges into the open end of the carbon removal pipe 17, thereby altering the carbon to water ratio in the pipe.

The carbon and water may enter the end of the filter through a ferrule to ensure that the carbon water mixture entering the end of the pipe is flowing down the centre of the pipe, so that the water entering through the filter meets up with carbon water mixture entering the end of the pipe in a manner to form a concentric ring, thereby giving a good arrangement for mixing of the two streams. The ferrule need not be concentric, but could be eccentric to allow for the fact that if the pipe is lying in the bottom of the bed, the water flowing through the filter will flow more through the top than through the bottom.

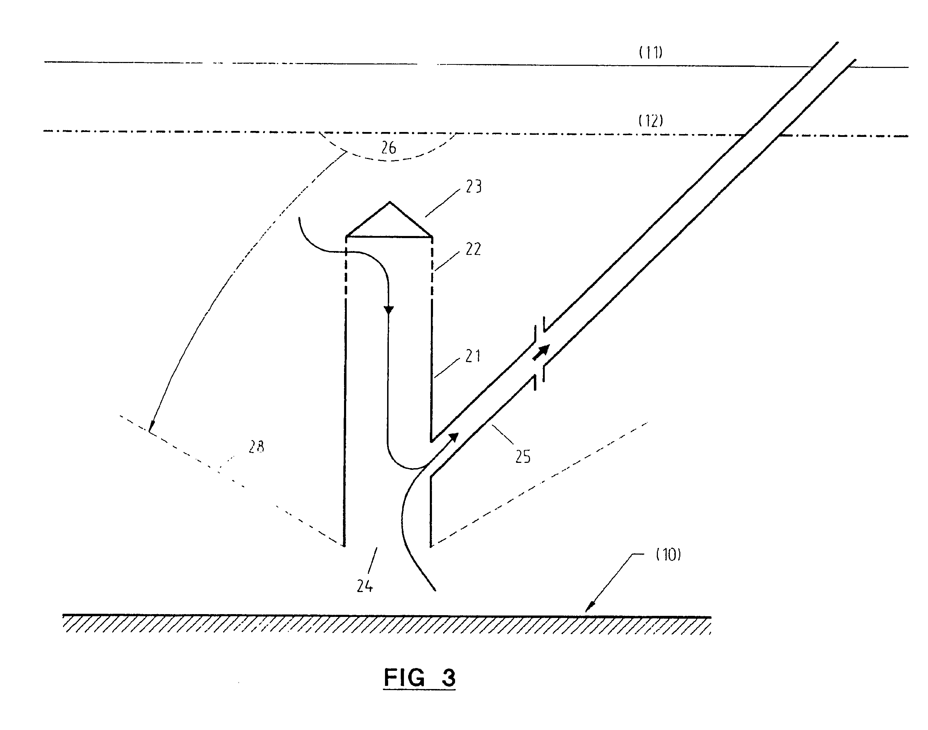

Figure 3 shows a cross-section through an adsorber tank which is filled with water and contains a submerged bed of e.g. GAC or sand. It also shows a cross-section of a tube 21 fixed to the top of which is a Wedgewire (TM) filter tube 22. This filter tube 22 allows water but not solid to enter the tube 21. The top end of the filter tube 22 is capped with a cone 23 whose angle is greater than the static angle of repose of the solid. The bottom of the tube 21 has an opening 24 which is located above the bottom of the bed. The tube 21 has a side arm pipe 25, the purpose of which is to allow suction to be applied to the tube 21 and to provide a conduit through which a slurry of solid and water may be drawn out of the adsorber.

In use water filters through the tube 22 and dilutes the slurry entering the bottom opening 24, thereby reducing the pressure drop needed to cause the solid to leave the adsorber in a slurry through the side arm pipe 25.

When suction is first applied, a cone of depression 26 forms above the cone 23. In time, as solid is removed from the adsorber, the depression adopts the angle shown in the diagram at 28.

The pressure differential needed between the particle bed and the inside of the side arm pipe 25 is produced e.g. by a pump (suction) or an ejector. The exact means of creating the pressure differential is not greatly significant to the working of the invention.

Normally the water level in the adsorber tank is maintained by adding make-up water whilst water is being withdrawn through the side arm pipe (25) with the exhausted granular activated carbon.

Although this invention has been described as being for the removal of granular activated carbon from adsorbers, it could also be used for the removal of any solid particles from fluids (e.g. the particles could be in a fluidized bed). In such a case the removal pipe would not be described as submerged but would simply be a pipe containing an orifice and a filter being present in the particle/fluid bed.

## Claims

1. An arrangement for removing settled solid particles from a fluid, comprising a tank containing a bed composed of the particles in the fluid, and a removal pipe through which the particles and fluid can be withdrawn from the bed, **characterised** in that the removal pipe (25) is adapted to withdraw both a mixture of the fluid and particles (24), and also substantially pure fluid (22) drawn from within the tank.

2. An arrangement as claimed in Claim 1 **characterised** in that the substantially pure fluid is drawn into the removal pipe through a filter.

3. An arrangement as claimed in Claim 2 **characterised** in that the filter is made from Wedgewire (TM).

4. An arrangement as claimed in Claim 1 **characterised** in that the substantially pure fluid is drawn into the removal pipe from a region of pure fluid within the tank.

5. An arrangement as claimed in Claim 4 **characterised** in that the region of pure fluid is above the bed composed of particles in the fluid.

6. An arrangement as claimed in any one of the preceding claims **characterised** in that the tank contains a liquid.

7. An arrangement as claimed in Claim 6 **characterised** in that the liquid is water and the particles are of granular activated carbon or sand or a mixture of both.

8. An arrangement substantially as hereinbefore described with reference to and as shown in the accompanying drawings.

FIG 1

FIG 2

EP 0 437 311 A1

**FIG 3**

EP 0 437 311 A1

European Patent Office

**EUROPEAN SEARCH REPORT**

Application Number

| DOCUMENTS CONSIDERED TO BE RELEVANT | | | EP 91300036.0 | |
|---|---|---|---|---|
| Category | Citation of document with indication, where appropriate, of relevant passages | Relevant to claim | CLASSIFICATION OF THE APPLICATION (Int. Cl.5) | |
| A | US - A - 4 479 875 (NELSON) * Column 2, line 19 - column 3, line 3 * -- | 1,2 | C 02 F 1/00 C 02 F 1/28 | |
| A | EP - A1 - 0 348 670 (KRUK) * Totality * -- | 1 | | |
| A | DE - A1 - 3 230 323 (OTTMANNS ZIEGEL UND KUNST- STOFFE GMBH) * Claims 1,2 * -- | 1,3 | | |
| P,A | WO - A1 - 90/09 352 (SKOGLAND) * Abstract * ---- | 1 | | |
| | | | TECHNICAL FIELDS SEARCHED (Int. Cl.5) | |
| | | | C 02 F E 02 B | |

The present search report has been drawn up for all claims

| Place of search | Date of completion of the search | Examiner |
|---|---|---|
| VIENNA | 13-03-1991 | WILFLINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)